# EUROPEAN PATENT APPLICATION

(11) **EP 4 787 927 A1**
(43) Date of publication of application: **05.08.2026**
(21) Application number: 24869760.9
(22) Date of filing: 21.05.2024
(51) Int. Cl.: H04W 24/02, H04W 76/15

(54) **TIMING ADVANCE GROUP DETERMINATION METHOD AND APPARATUS**

(30) Priority: 27.09.2023 CN 202311257463
(71) Applicant: Datang Mobile Communications Equipment Co., Ltd., Beijing 100085 (CN)
(72) Inventor: XU, Meng, Beijing 100085 (CN)
(74) Representative: Studio Torta S.p.A.
(86) International application number: PCT/CN2024/094353
(87) International publication number: WO 2025/066194

(57) **Abstract**

The present disclosure provides a method and device for determining a timing advance group, and relates to the technical field of communications. The method in the embodiments of the present disclosure includes: obtaining a value of a TAG associated parameter; determining a target TAG associated with the value of the TAG associated parameter according to an association relationship. The association relationship includes at least one of the following: a first association relationship between a value of a TAG associated parameter and TAG, specified in the protocol; a second association relationship between a value of a TAG associated parameter and TAG, configured by first indication; or a third association relationship between a value of a TAG associated parameter and a primary timing advance group (PTAG) under a preset condition.

## Description

The present application is filed based on and claims the priority of Chinese Application No. 202311257463.1 filed on September 27, 2023, entitled "method for determining timing advance group", the disclosure of which are incorporated in their entireties by reference herein.

### TECHNICAL FIELD

The present disclosure relates to the field of communication technology, and in particular to a method and device for determining timing advance group.

### BACKGROUND

The R18 Multiple-Input Multiple-Output (MIMO) enhancement project supports a 2-timing advance (TA) mechanism, that is, one serving cell can be associated with two timing advance groups (TAGs), which are corresponding to two transmission reception points (TRPs). Each TAG is associated with a TA value. However, there is no solution for how to determine the TAG used by user equipment in the two TAGs associated with the serving cell.

### SUMMARY

An object of the present disclosure is to provide a method and device for determining a timing advance group, which can solve the problem of how to determine the TAG used by user equipment among multiple TAGs associated with one serving cell in a scenario where the serving cell supports multiple TAs.

The present disclosure provides a method for determining a timing advance group (TAG), performed by a user equipment (UE), including:
obtaining a value of the TAG associated parameter;
determining a target TAG associated with the value of the TAG associated parameter according to an association relationship;
wherein the association relationship includes at least one of the following:
   a first association relationship between a value of a TAG associated parameter and TAG, specified in the protocol;
   a second association relationship between the value of the TAG associated parameter and the TAG, configured by first indication; or,
   a third association relationship between a value of a TAG associated parameter and a primary timing advance group (PTAG) under a preset condition;
   the preset condition includes at least one of the following:
      UE is in inactive state or idle state;
      the TAG associated parameter is received through a contention based random access procedure;
      the UE supports a multi-timing advance (TA) mechanism;
      a time alignment timer (TAT) associated with PTAG is not running; or
      a value of the TAG associated parameter belongs to a preset value range.

Optionally, the first association relationship is obtained based on a preset mapping rule;
the preset mapping rule is to associate different values of the TAG associated parameter according to a preset arrangement order of TAG identifiers, and the TAG identifier is a TAG identifier associated with a serving cell configured by the network for the UE.

Optionally, the determining a target TAG associated with the value of the TAG associated parameter according to an association relationship, includes:
in case that a preset condition is met, determining a target PTAG associated with the value of the TAG associated parameter, according to the third association relationship.

Optionally, the determining a target TAG associated with the value of the TAG associated parameter according to an association relationship, includes:
in case that the value of the TAG associated parameter is a first preset value, determining, according to the third association relationship, that the target TAG is a first PTAG corresponding to the first preset value;
or, in case that the value of the TAG associated parameter is a second preset value, determining, according to the third association relationship, that the target TAG is a second PTAG corresponding to a second preset value.

Optionally, the TAG identifier of the first PTAG is a default identifier.

Optionally, the TAG identifier of the second PTAG satisfies at least one of the following:
the TAG identifier of the second PTAG is a target value specified by the protocol;
the TAG identifier of the second PTAG is configured by the network;
the TAG identifier of the second PTAG is determined based on the UE implementation; or
the value of the TAG identifier of the second PTAG is different from the default identifier.

Optionally, the determining a target TAG associated with the value of the TAG associated parameter according to an association relationship, includes:
obtaining second indication, wherein the second indication is used to indicate whether the network supports a multi-TA mechanism;
in case that the second indication indicates that the network supports a multi-TA mechanism, determining a target TAG associated with the value of the TAG associated parameter according to the association relationship.

Optionally, the third association relationship is obtained based on a mapping relationship between each preset value within a preset value range configured by the third indication and a TAG identifier of the PTAG.

One embodiment of the present disclosure provides a method for determining a timing advance group (TAG), performed by a network side device, including:
determining a value of a TAG associated parameter according to an association relationship;
transmitting the TAG associated parameter with a determined value;
wherein the association relationship includes at least one of the following items.
a first association relationship between a value of a TAG associated parameter and TAG, specified in the protocol;
a second association relationship between the value of the TAG associated parameter and the TAG, configured by first indication; or
a third association relationship between a value of a TAG associated parameter and a primary timing advance group (PTAG) under a preset condition;
the preset condition includes at least one of the following:
   the UE is in inactive state or idle state;
   the TAG associated parameter is received through a contention based random access procedure;
   the UE supports a multi-timing advance (TA) mechanism;
   a time alignment timer (TAT) associated with PTAG is not running; or
   a value of the TAG associated parameter belongs to a preset value range.

Optionally, the method in the embodiment of the present disclosure further includes:
transmitting second indication, where the second indication is used to indicate whether the network supports the multi-TA mechanism.

Optionally, the method in the embodiment of the present disclosure further includes:
configuring the third association relationship based on third indication;
wherein the third indication is used to configure a mapping relationship between each preset value within a preset value range and the TAG identifier of the PTAG.

Optionally, the method in the embodiment of the present disclosure further includes at least one of the following:
configuring a TAG identifier associated with a second PTAG; wherein the second PTAG is a PTAG corresponding to the TAG associated parameter with a value being a second preset value; or
configuring a preset value range for the value of the TAG associated parameter; wherein in case that the value of the TAG associated parameter belongs to the preset value range, the TAG associated with the TAG associated parameter is PTAG.

One embodiment of the present disclosure provides a device for determining a timing advance group (TAG), including: a memory, a transceiver, and a processor;
wherein the memory is used to store a computer program; the transceiver is used to transmit and receive data under the control of the processor; the processor is used to read the computer program in the memory and perform the following operations:
obtaining a value of the TAG associated parameter;
determining a target TAG associated with the value of the TAG associated parameter according to an association relationship;
wherein the association relationship includes at least one of the following items.
a first association relationship between a value of a TAG associated parameter and TAG, specified in the protocol;
a second association relationship between the value of the TAG associated parameter and the TAG, configured by first indication; or
a third association relationship between a value of a TAG associated parameter and a primary timing advance group (PTAG) under a preset condition;
the preset condition includes at least one of the following:
   UE is in inactive state or idle state;
   the TAG associated parameter is received through a contention based random access procedure;
   the UE supports a multi-timing advance (TA) mechanism;
   a time alignment timer (TAT) associated with PTAG is not running; or
   a value of the TAG associated parameter belongs to a preset value range.

Optionally, the first association relationship is obtained based on a preset mapping rule;
the preset mapping rule is to associate different values of the TAG associated parameter according to a preset arrangement order of TAG identifiers, and the TAG identifier is a TAG identifier associated with a serving cell configured by the network for the UE.

Optionally, the processor is used to perform the following operations:
in case that a preset condition is met, determining a target PTAG associated with the value of the TAG associated parameter, according to the third association relationship.

Optionally, the processor is used to perform the following operations:
in case that the value of the TAG associated parameter is a first preset value, determining, according to the third association relationship, that the target TAG is a first PTAG corresponding to the first preset value;
or, in case that the value of the TAG associated parameter is a second preset value, determining, according to the third association relationship, that the target TAG is a second PTAG corresponding to a second preset value.

Optionally, the TAG identifier of the first PTAG is a default identifier.

Optionally, the TAG identifier of the second PTAG satisfies at least one of the following:
the TAG identifier of the second PTAG is a target value specified by the protocol;
the TAG identifier of the second PTAG is configured by the network;
the TAG identifier of the second PTAG is determined based on the UE implementation; or
the value of the TAG identifier of the second PTAG is different from the default identifier.

Optionally, the processor is used to perform the following operations:
obtaining second indication, wherein the second indication is used to indicate whether the network supports a multi-TA mechanism;
in case that the second indication indicates that the network supports a multi-TA mechanism, determining a target TAG associated with the value of the TAG associated parameter according to the association relationship.

Optionally, the third association relationship is obtained based on a mapping relationship between each preset value within a preset value range configured by the third indication and a TAG identifier of the PTAG.

One embodiment of the present disclosure provides a device for determining a timing advance group (TAG), including: a memory, a transceiver, and a processor;
wherein the memory is used to store a computer program; the transceiver is used to transmit and receive data under the control of the processor; the processor is used to read the computer program in the memory and perform the following operations:
determining a value of a TAG associated parameter according to an association relationship;
transmitting the TAG associated parameter with a determined value;
wherein the association relationship includes at least one of the following items.
a first association relationship between a value of a TAG associated parameter and TAG, specified in the protocol;
a second association relationship between the value of the TAG associated parameter and the TAG, configured by first indication; or
a third association relationship between a value of a TAG associated parameter and a primary timing advance group (PTAG) under a preset condition;
the preset condition includes at least one of the following:
   UE is in inactive state or idle state;
   the TAG associated parameter is received through a contention based random access procedure;
   the UE supports a multi-timing advance (TA) mechanism;
   a time alignment timer (TAT) associated with PTAG is not running; or
   a value of the TAG associated parameter belongs to a preset value range.

Optionally, the processor is used to perform the following operations:
transmitting second indication, where the second indication is used to indicate whether the network supports the multi-TA mechanism.

Optionally, the processor is used to perform the following operations:
configuring the third association relationship based on third indication;
wherein the third indication is used to configure a mapping relationship between each preset value within a preset value range and the TAG identifier of the PTAG.

Optionally, the processor is used to perform at least one of the following:
configuring a TAG identifier associated with a second PTAG; wherein the second PTAG is a PTAG corresponding to the TAG associated parameter with a value being a second preset value; or
configuring a preset value range for the value of the TAG associated parameter; wherein in case that the value of the TAG associated parameter belongs to the preset value range, the TAG associated with the TAG associated parameter is PTAG.

One embodiment of the present disclosure provides a device for determining a timing advance group (TAG), including:
an obtaining unit used to obtain a value of the TAG associated parameter;
a first determining unit used to determine a target TAG associated with the value of the TAG associated parameter according to an association relationship;
wherein the association relationship includes at least one of the following items.
a first association relationship between a value of a TAG associated parameter and TAG, specified in the protocol;
a second association relationship between the value of the TAG associated parameter and the TAG, configured by first indication; or
a third association relationship between a value of a TAG associated parameter and a primary timing advance group (PTAG) under a preset condition;
the preset condition includes at least one of the following:
   UE is in inactive state or idle state;
   the TAG associated parameter is received through a contention based random access procedure;
   the UE supports a multi-timing advance (TA) mechanism;
   a time alignment timer (TAT) associated with PTAG is not running; or
   a value of the TAG associated parameter belongs to a preset value range.

Optionally, the first association relationship is obtained based on a preset mapping rule;
the preset mapping rule is to associate different values of the TAG associated parameter according to a preset arrangement order of TAG identifiers, and the TAG identifier is a TAG identifier associated with a serving cell configured by the network for the UE.

Optionally, the first determining unit is used to, in case that a preset condition is met, determine a target PTAG associated with the value of the TAG associated parameter, according to the third association relationship.

Optionally, the first determining unit is used to:
in case that the value of the TAG associated parameter is a first preset value, determine, according to the third association relationship, that the target TAG is a first PTAG corresponding to the first preset value;
or, in case that the value of the TAG associated parameter is a second preset value, determine, according to the third association relationship, that the target TAG is a second PTAG corresponding to a second preset value.

Optionally, the TAG identifier of the first PTAG is a default identifier.

Optionally, the TAG identifier of the second PTAG satisfies at least one of the following:
the TAG identifier of the second PTAG is a target value specified by the protocol;
the TAG identifier of the second PTAG is configured by the network;
the TAG identifier of the second PTAG is determined based on the UE implementation; or
the value of the TAG identifier of the second PTAG is different from the default identifier.

Optionally, the first determining unit includes:
an obtaining subunit used to obtain second indication, wherein the second indication is used to indicate whether the network supports a multi-TA mechanism;
a determining subunit used to, in case that the second indication indicates that the network supports a multi-TA mechanism, determine a target TAG associated with the value of the TAG associated parameter according to the association relationship.

Optionally, the third association relationship is obtained based on a mapping relationship between each preset value within a preset value range configured by the third indication and a TAG identifier of the PTAG.

One embodiment of the present disclosure provides a device for determining a timing advance group (TAG), including:
a second determining unit used to determine a value of a TAG associated parameter according to an association relationship;
a first transmission unit used to transmit the TAG associated parameter with a determined value;
wherein the association relationship includes at least one of the following items.
a first association relationship between a value of a TAG associated parameter and TAG, specified in the protocol;
a second association relationship between the value of the TAG associated parameter and the TAG, configured by first indication; or
a third association relationship between a value of a TAG associated parameter and a primary timing advance group (PTAG) under a preset condition;
the preset condition includes at least one of the following:
   UE is in inactive state or idle state;
   the TAG associated parameter is received through a contention based random access procedure;
   the UE supports a multi-timing advance (TA) mechanism;
   a time alignment timer (TAT) associated with PTAG is not running; or
   a value of the TAG associated parameter belongs to a preset value range.

Optionally, the device in the embodiment of the present disclosure further includes:
a second transmission unit used to transmit second indication, where the second indication is used to indicate whether the network supports the multi-TA mechanism.

Optionally, the device in the embodiment of the present disclosure further includes:
a first configuration unit used to configure the third association relationship based on third indication;
wherein the third indication is used to configure a mapping relationship between each preset value within a preset value range and the TAG identifier of the PTAG.

Optionally, the device in the embodiment of the present disclosure further includes:
a second configuration unit used to perform at least one of the following:
configuring a TAG identifier associated with a second PTAG; wherein the second PTAG is a PTAG corresponding to the TAG associated parameter with a value being a second preset value; or
configuring a preset value range for the value of the TAG associated parameter; wherein in case that the value of the TAG associated parameter belongs to the preset value range, the TAG associated with the TAG associated parameter is PTAG.

One embodiment of the present disclosure provides a processor-readable storage medium, including: a computer program stored thereon; wherein the computer program is used to cause a processor to execute steps of the above method for determining a timing advance group.

The above technical solution of the present disclosure provides at least the following beneficial effects.

In the embodiment of the present disclosure, a value of the TAG associated parameter is obtained, and a target TAG associated with the value of the TAG associated parameter is determined according to an association relationship; wherein the association relationship includes at least one of the following: a first association relationship between a value of a TAG associated parameter and TAG, specified in the protocol; a second association relationship between the value of the TAG associated parameter and the TAG, configured by first indication; or a third association relationship between a value of a TAG associated parameter and a primary timing advance group (PTAG) under a preset condition; the preset condition includes at least one of the following: UE is in inactive state or idle state, the TAG associated parameter is received through a contention based random access procedure, the UE supports a multi-timing advance (TA) mechanism, a time alignment timer (TAT) associated with PTAG is not running, or a value of the TAG associated parameter belongs to a preset value range. In the above technical solution, the purpose of the UE determining the target TAG associated with the applied TA or determining the applied TA according to the target TAG in the multi-TA scenario, is achieved through the above association relationship.

### BRIEF DESCRIPTION OF THE DRAWINGS

FIG. 1 is a structural diagram of a network system applicable to an embodiment of the present disclosure;
FIG. 2 is a first flow chart of a method for determining timing advance group according to an embodiment of the present disclosure;
FIG. 3 is a second flow chart of a method for determining timing advance group according to an embodiment of the present disclosure;
FIG. 4 is a first schematic diagram of a device for determining timing advance group according to an embodiment of the present disclosure;
FIG. 5 is a second schematic diagram of a device for determining timing advance group according to an embodiment of the present disclosure;
FIG. 6 is a first schematic diagram showing modules of a device for determining timing advance group according to an embodiment of the present disclosure; and
FIG. 7 is a second schematic diagram showing modules of a device for determining timing advance group according to an embodiment of the present disclosure.

### DETAILED DESCRIPTION

The technical solutions in embodiments of the present application are described clearly and completely in conjunction with drawings in the embodiments of the present application. Apparently, the described embodiments are merely a part of rather than all the embodiments of the present application. All other embodiments obtained by a person ordinary skilled in the art based on the embodiments of the present application without any creative efforts fall within the protection scope of the present application.

Terms such as "first" and "second" in the specification and the claims of the present application are used to distinguish similar objects and are not necessarily used to describe a specific order or sequence. It is to be understood that data used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device.

The term "and/or" in the embodiments of the present application describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it. The term "multiple" in the embodiments of the present application refers to two or more than two, and other words for expressing quantities are similar to it.

In embodiments of the present application, the expressions such as "exemplary" or "for example" are used to indicate an example, illustration, or description. Any embodiment or design solution described as "exemplary" or "for example" in the embodiments of the present application should not be construed as being preferred or advantageous over other embodiments or design solutions. Rather, the use of the expressions such as "exemplary" or "for example" is intended to present the relevant concepts in a specific manner.

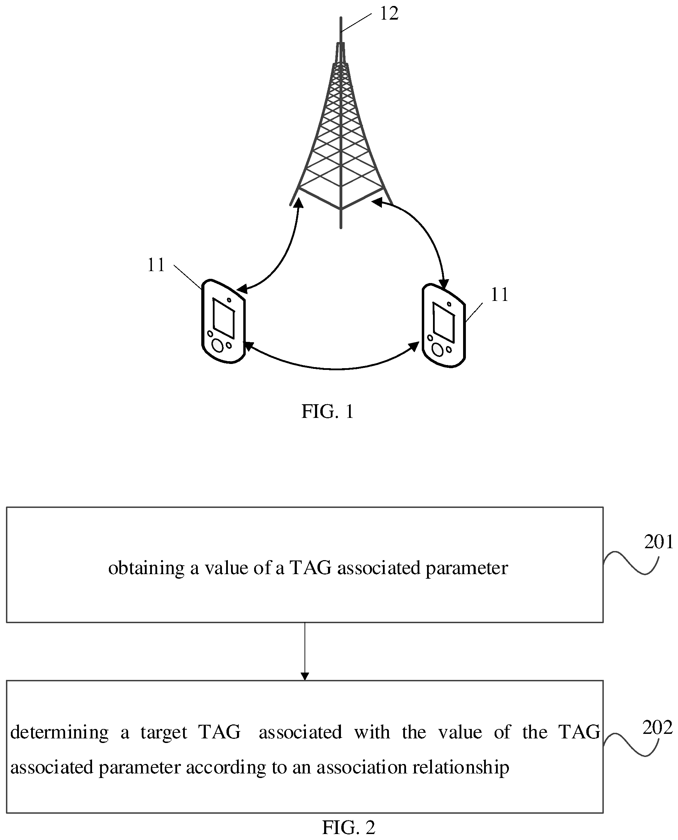

FIG. 1 is a structural diagram of a wireless communication system applicable to an embodiment of the present disclosure. The wireless communication system includes a terminal device 11 and a network side device (or network device) 12. The terminal device 11 may also be referred to as a terminal or a user equipment (UE). It is to be noted that the specific type of the terminal device 11 is not limited in the embodiments of the present disclosure. The network side device 12 may be a base station or a core network. It is to be noted that in the embodiments of the present disclosure, only a base station in a new radio (NR) system is used as an example, but the specific type of the base station is not limited.

In order to enable those skilled in the art to better understand the embodiments of the present disclosure, the following description is first made.

### (1) Special cell (SpCell) and Secondary cell (SCell)

The network can configure dual connectivity and carrier aggregation (CA) for the UE, with a purpose of increasing a transmission bandwidth of the UE and improving throughput. In case that the network configures dual connectivity for the UE, it configures a master cell group (MCG) and a secondary cell group (SCG) for the UE. The MCG and SCG can include at least one serving cell, which at least includes SpCell. The SpCell in the MCG is also called primary cell (PCell), the SpCell in the SCG is called PSCell, and remaining cells are all SCells. The UE needs to perform radio link monitoring and other actions on the SpCell.

### (2) Timing advance (TA) or timing advance group (TAG)

TA is a timing advance and is used to adjust uplink synchronization. The UE can initially obtain a TA value through a random access procedure.

One TA value can be applied to one TAG, where one TAG can include at least one serving cell, and each TAG is identified by a TAG identifier (ID). The TAG including the SpCell cell is called a primary timing advance group (PTAG), and remaining TAGs are called secondary timing advance groups (STAG). R18 supports 2TA feature, that is, one serving cell can be associated with two TAGs, and each TAG is associated with one TA value. It also supports 2PTAG, that is, in case that SpCell is configured with two TAGs, the two associated TAGs are both called PTAGs.

### (3) Random access channel (RACH)

The RACH process supports 4-step and 2-step RACH. For 4-step RACH, the UE receives a random access response (RAR) message in message 2 including a TA value which is applied to the corresponding TAG. For 2-step RACH, a TA value included in an absolute timing advance command medium access control control element (MAC CE) or a successful RAR received by the UE in message B (msgB) is applied to the corresponding TAG. R15-R17 only supports one serving cell associated with one TAG, and there is only one PTAG. For contention based random access (CBRA) procedure triggered by a UE in idle/inactive state, the UE applies the TA value to the PTAG. The TAG ID associated with the PTAG is 0.

As shown in FIG. 2, one embodiment of the present disclosure provides a method for determining timing advance group, performed by a user equipment. The method includes:
Step 201: obtaining a value of a timing advance group (TAG) associated parameter.

In the embodiment of the present disclosure, the value of the TAG associated parameter may be obtained through a transmission configuration indicator (TCI) or through a RAR (obtained through a 4-step RACH or a 2-step RACH) or an absolute timing advance command (obtained through a 2-step RACH), which is not limited thereto.

Optionally, the TAG associated parameter is N-bit indication associated with the TAG. For example, for a 2TA scenario, the TAG associated parameter is 1-bit indication associated with the TAG.

Step 202: determining a target TAG associated with the value of the TAG associated parameter according to an association relationship;
where the association relationship includes at least one of the following items.

The first item: a first association relationship between a value of a TAG associated parameter and TAG, specified in the protocol.

One specific possible implementation is that the protocol specifies that in case that the TAG associated parameter takes different values, it is associated with different configuration parameters. For example, in case that the protocol specifies that the value of TAG associated parameter is 0, it is associated with the first TAG, where the first TAG is configured via a signaling. That is, the signaling includes a configuration parameter of the first TAG, and a specific value of the first TAG is configured to the UE through the configuration parameter, which it is not limited to this. Or, the protocol specifies preset rules, and in case that different values of the TAG associated parameters are obtained through the preset rules, they are mapped to different TAG IDs. The implementation methods are not limited to the above two.

The second item: a second association relationship between the value of the TAG associated parameter and the TAG, configured by first indication; where the second association relationship is configured per UE or per cell or per cell group. One possible implementation is that the first indication specifies a specific TAG IDs associated with each value of the TAG associated parameter. For example, the first indication configures that in case that the value of TAG associated parameter is 0, it is associated with a specific TAG ID; or that TAG associated parameters with different values are associated with TAG IDs according to a specified rule. For example, a TAG associated parameter with a value of 0 is associated with a TAG ID with a smaller value. While a value of 0 is used here as an example, other values can also be configured for the TAG associated parameter by the first indication. Further, the first indication is not limited to configuring only a single associated parameter value, and the first indication can specify a specific TAG ID for each value of the TAG associated parameter in case that the TAG associated parameter can be set to different values. As one implementation, the first indication can be configured via broadcasted system information, and/or via dedicated signaling; that is, the first indication is a broadcast message and/or dedicated signaling.

The third item: a third association relationship between a value of a TAG associated parameter and a primary timing advance group (PTAG) under a preset condition.

As an implementation, by taking supporting 2TA as an example, the above TAG associated parameter can be indicated by 1-bit indication, and the value of the TAG associated parameter can be 0 or 1.

For example, for the above first item, the method of specifying the first association relationship through the protocol can be described as a method of implicitly configuring the association relationship between the value of the TAG associated parameter and the TAG. For example, the signaling allows each serving cell to be respectively configured with TAG1 and TAG2which are associated with two TAG IDs respectively. That is, the signaling includes two fields indicating TAG1 and TAG2 respectively, where the protocol specifies that in case that the 1-bit TAG associated parameter is set to value of 0, it indicates that an associated TAG is TAG1; and in case that the 1-bit TAG associated parameter is set to value of 1, it indicates that an associated TAG is TAG2. One specific implementation is as follows:
the UE is configured with a serving cell cell1, where the network configures TAG1 and TAG2 associated with the cell1, and a TAG ID associated with TAG1 is 2, and a TAG ID associated with TAG2 is 3;
in case that the UE receives a 1-bit TAG associated parameter (or TAG association indication) with a value of 0, it indicates it associated with TAG1, that is, associated with TAG with TAG ID 2; in case that the value is 1, it indicates it associated with TAG2, that is, associated with TAG with TAG ID 3.

The method of specifying the first association relationship through a protocol in the above first item can be described as configuring the first association relationship in an implicit manner.

For the second item above, the manner of using first indication to configure a second association relationship between the value of the TAG associated parameter and the TAG, can be described as a manner of configuring an association relationship between the value of the TAG associated parameter and the TAG in an explicit manner. For example, the signaling allows each serving cell to be respectively configured with TAG1 and TAG2 which are associated with two TAG IDs respectively; that is, the signaling includes two fields to indicate TAG1 and TAG2 respectively; additionally, the signaling further includes one or two fields for configuring an association relationship between a value of a 1-bit TAG associated parameter and TAG, for example, configuring associated TAG in case that the TAG associated parameter is the value 0 or value 1 respectively. One specific implementation is as follows:

the UE is configured with a serving cell cell1, where the network configures associated TAG1 and TAG2 for the cell1, and a TAG ID associated with TAG1 is 2, a TAG ID associated with TAG2 is 3, and the network configures (via first indication) that in case that the 1-bit TAG associated parameter is set to be 0, the 1-bit TAG associated parameter is associated with TAG2;

in case that the UE receives a 1-bit TAG associated parameter with a value of 0, it indicates it associated with TAG2, that is, associated with the TAG with TAG ID 3. In case that the value of the TAG associated parameter is 1, it indicates it associated with TAG1, that is, associated with the TAG with TAG ID 2. Alternatively, the network configures that in case that the 1-bit TAG associated parameter is set to value 0, it is associated the TAG with the smaller TAG ID between TAG1 and TAG2. In case that the UE receives a 1-bit TAG associated parameter with a value of 0, it indicates it associated with the TAG with the smaller TAG ID between TAG1 and TAG2, that is, associated with the TAG with TAG ID 2, namely TAG1. In case that the value of the TAG associated parameter is 1, it indicates it associated with the TAG with the larger TAG ID between TAG1 and TAG2, that is, associated with the TAG with TAG ID 3, namely TAG2.

The above 1-bit TAG associated parameter is received through a transmission configuration indicator (TCI) or through a RAR or an absolute timing advance command.

For the above third item, the preset condition includes at least one of the following:
condition 1: UE is in inactive state or idle state;
condition 2: the TAG associated parameter is received through a contention based random access procedure; for example, the TAG associated parameter is received in the RAR, where the RAR is transmitted in a contention based random access procedure;
condition 3: the UE supports a multi-timing advance (TA) mechanism, that is, one serving cell can be associated with multiple timing advance groups; for example, one serving cell supports 2TA, that is, the serving cell is allowed to be configured to be associated with two TAGs; that is, the UE supports a serving cell being associated with multiple timing advance groups, for example, associated with 2 TAGs;
condition 4: a time calibration timer or time alignment timer (TAT) associated with PTAG is not running; the TAT is used by the UE side to monitor validity of TA value corresponding to the PTAG; where it can be that any TAT associated with any PTAG is not running; or at least one TAT associated with the PTAG is not running or any TAT associated with any PTAG is not running;
condition 5: a value of the TAG associated parameter belongs to a preset value range. The preset value range is obtained through broadcast information or through dedicated signaling, or both.

As an implementation, in case that any one of the above conditions is met (such as condition 1, condition 2, condition 3, condition 4 or condition 5 is met), the UE determines a target TAG associated with the value of the TAG associated parameter based on the above third association relationship.

As an implementation, in case that any two of the above conditions are met (such as meeting condition 1 and condition 2, or meeting condition 3 and condition 4, or meeting condition 1 and condition 5, etc.), the UE determines the target TAG associated with the value of the TAG associated parameter based on the above third association relationship.

As an implementation, in case that any three of the above conditions are met (such as meeting condition 1, condition 2 and condition 3, or meeting condition 1, condition 2 and condition 4, or meeting condition 1, condition 2 or condition 5, etc.), the UE determines the target TAG associated with the value of the TAG associated parameter based on the above third association relationship.

As an implementation, in case that any four of the above conditions are met (such as meeting condition 1, condition 2, condition 3 and condition 4, or meeting condition 1, condition 2, condition 4 and condition 5, etc.), the UE determines the target TAG associated with the value of the TAG associated parameter based on the above third association relationship.

As an implementation, in case that the above five conditions are met, the UE determines the target TAG associated with the value of the TAG associated parameter based on the above third association relationship.

In the above solution, after obtaining the value of the TAG associated parameter, in case that the following conditions are met: if the UE is in inactive state or idle state, the TAG associated parameter is received through a contention based random access procedure, the UE supports a multi-timing advance TA mechanism, the TAT associated with the PTAG is not running and/or the value of the TAG associated parameter belongs to a preset value range (one or more of the above are met), the UE determines the target TAG associated with the value of the TAG associated parameter based on the above third association relationship.

In the embodiment of the present disclosure, for triggering CBRA procedure and/or UE in idle/inactive state, in case that the UE supports the multi-TA mechanism, the TAG associated parameter is received through the contention based random access procedure, the TAT associated with the PTAG is not running (that is, the TA corresponding to the PTAG is in an invalid state) and/or the value of the TAG associated parameter belongs to a preset value range (one or more of the above are MET), it indicates that the UE needs to determine a target PTAG associated with the value of the TAG associated parameter based on the above third association relationship, so that in case that the inactive/idle UE triggers random access procedure and the multi-TA feature has not been configured, the purpose of associating the TA value received in the random access procedure with the corresponding PTAG can be achieved.

In addition, it is to be noted that the first association relationship and the second association relationship may be the same or different.

Optionally, the first association relationship is obtained based on a preset mapping rule.

The preset mapping rule is to associate different values of the TAG associated parameter according to a preset arrangement order of TAG identifiers, and the TAG identifier is a TAG identifier associated with a serving cell configured by the network for the UE.

As an implementation, the preset arrangement order of the above TAG identifiers is in ascending order or in descending order. For example, the TAG associated parameter with the value of 0 is associated with the TAG identifier with a smaller value (such as identifier 0) in the TAG identifiers; and in case that the TAG associated parameter with a value of 1 is associated with the TAG identifier with a larger value (such as identifier 1) in the TAG identifiers. Alternatively, the preset arrangement order of the TAG identifiers is arranged in the order of the time in case that the UE obtains the TA, for example, the UE obtains TA associated with TAG1 at time T1, the UE obtains TA associated with TAG2 at time T2, where T1 is earlier than T2, and the preset arrangement order is arranged in the order of the time in case that the UE obtains the TA, then the TAG associated parameter with a value of 0 is associated with a TAG which is associated with the TA obtained earlier, that is, TAG1.

Based on the above preset mapping rules, the first association relationship specified in the protocol is obtained. In case that the UE determines the target TAG associated with the value of the TAG associated parameter based on the first association relationship, there is no need for the network side to transmit signaling for indicating the target TAG associated with the specific value of the TAG associated parameter, thereby saving signaling interaction between the network side and the UE, and thus saving signaling overhead.

Optionally, the determining, according to the association relationship, a target TAG associated with the value of the TAG associated parameter, includes:
in case that a preset condition is met, determining a target PTAG associated with the value of the TAG associated parameter, according to the third association relationship.

For example, in case that the UE obtains the value of the TAG associated parameter through the CBRA procedure, the target PTAG associated with the value of the TAG associated parameter is determined according to the third association relationship. In addition, in case that the TA is also obtained in the above CBRA procedure, the TA is applied to the target PTAG. Optionally, this UE in idle/inactive state.

Here, for triggering the CBRA procedure and/or UE in idle/inactive state, based on the above third association relationship, the purpose of determining the target PTAG associated with the value of the TAG associated parameter is achieved. In case that the TA is received, the TA is associated with the corresponding PTAG according to the TAG associated parameter. Therefore, for the serving cell associated with two PTAGs, the two PTAGs are associated with different TAG IDs. In case that the inactive/idle UE triggers random access procedure and the 2TA feature has not been configured, the purpose of associating the TA value received in the random access procedure with the corresponding PTAG, i.e., TAG ID corresponding to the associated PTAG, can be achieved.

Optionally, the determining, according to the association relationship, a target TAG associated with the value of the TAG associated parameter, includes:
in case that the value of the TAG associated parameter is a first preset value, determining, according to the third association relationship, that the target TAG is a first PTAG corresponding to the first preset value;
or, in case that the value of the TAG associated parameter is a second preset value, determining, according to the third association relationship, that the target TAG is a second PTAG corresponding to a second preset value.

For example, the first preset value is 0, and the first PTAG is a PTAG with a TAG identifier of 0; for example, the second preset value is 1, and the second PTAG is a PTAG with a TAG identifier of a non-zero value, for example, a value corresponding to the TAG identifier of a non-zero value is 1.

It is to be noted that the number of the second preset values can be one or more, and different second preset values correspond to different second PTAG identifiers. For example, in case that the second preset value is 1, the associated second PTAG value is 1; and in case that the second preset value is 2, the associated second PTAG value is 2, etc.

Here, different preset values in the third association relationship are associated with different PTAGs. Based on the third association relationship, the association relationship between different preset values and PTAGs can be determined.

As an implementation, the third association relationship is obtained based on a mapping relationship between each preset value within a preset value range configured by the third indication and a TAG identifier of the PTAG.

Here, the third indication is used to configure the third association relationship in an explicit manner. The specific implementation of this method can refer to the method for obtaining the second association relationship, which will not be repeated here.

Another implementation is to map each preset value within the preset value range to the TAG identifier of the PTAG through a preset mapping rule. For example, the preset rule is defined as a one-to-one mapping between TAG IDs associated with each PTAG, sorted in ascending order, and values within a preset range, sorted in ascending order. The PTAG may be all PTAGs, or only include the second PTAG. The specific implementation of this method can refer to the method for obtaining the first association relationship, which will not be repeated here.

One implementation of the preset value range is: for example, a value range of the TAG associated parameter can be 0-3, and the preset value range is {0,1}. Then, the TAG associated parameter with a value of {0,1} is associated with PTAG, otherwise TAG associated parameter is not associated with PTAG.

Optionally, the TAG identifier of the first PTAG is a default identifier, such as a TAG identifier of 0.

Optionally, the TAG identifier of the second PTAG satisfies at least one of the following:
the TAG identifier of the second PTAG is a target value specified by the protocol; for example, the protocol specifies that the TAG identifier of the second PTAG is 1;
the TAG identifier of the second PTAG is configured by the network, for example, configured by the network via broadcasting; for example, the TAG identifier of the second PTAG configured by the network is 1;
the TAG identifier of the second PTAG is determined based on the UE implementation; for example, a value range of the TAG identifier is 0-3, and one of the values is selected as the second PTAG based on the UE implementation, such as 1;
the value of the TAG identifier of the second PTAG is different from the default identifier. For example, the value of the first PTAG is the default identifier, such as 0, and the TAG identifier of the second PTAG here is a non-zero value, that is, a value different from the first PTAG. The specific value may be determined by the protocol, or configured by the network, or the UE implementation, which will not be repeated here.

As an implementation, the determining, according to the association relationship, the target TAG associated with the value of the TAG associated parameter, includes:
obtaining second indication, where the second indication is used to indicate whether the network supports a multi-TA mechanism;
in case that the second indication indicates that the network supports a multi-TA mechanism, determining a target TAG associated with the value of the TAG associated parameter according to the association relationship.

Here, in case that the second indication indicates that the network supports the multi-TA mechanism, it means that the serving cell can be associated with multiple TAGs, and then, it is necessary to determine the target TAG associated with the value of the TAG associated parameter based on the above association relationship. One possible implementation is: the second indication indicates that the network supports the multi-TA mechanism and at the same time indicates that the UE needs to read the TAG associated parameter, and an associated target TAG is determined according to the value of the TAG associated parameter, otherwise ignoring the TAG associated parameter or considering that the TAG associated parameter is a default value; or the second indication indicates that the network supports the multi-TA mechanism and at the same time indicates that in certain scenarios (for example, and at least one of the following conditions is met: during contention based access procedure, UE in idle/inactive state, UE has not yet configured with multi-TA, or UE supports multi-TA characteristics), the TAG associated parameter needs to be read, an associated target TAG is determined according to the value of the TAG associated parameter, otherwise ignoring the TAG associated parameter or considering that the TAG associated parameter is a default value; or the second indication indicates that the network supports the multi-TA mechanism and at the same time indicates that the UE needs to read the TAG associated parameter, if the TAG associated parameter is within a preset value range, an associated target TAG is determined according to the value of the TAG associated parameter, otherwise (the value of the TAG associated parameter is not within the preset value range, or the second indication indicates that the multi-TA mechanism is not supported) ignoring the TAG associated parameter or considering that the TAG associated parameter is a default value.

In one embodiment of the present disclosure, the procedure of determining the target TAG based on the third association relationship under the above preset conditions includes, taking 2TA as an example, but not excluding other multi-TAG mechanism situations:
Step 0: the UE receives second indication from the network through system information, where the second indication indicates to the UE that the network supports the 2TA feature;
Step 1: a UE in idle/inactive state triggers a CBRA procedure, or a connected UE triggers a CBRA procedure, and the UE has no TAT associated with a PTAG running, wherein the CBRA is a 4-step or 2-step CBRA procedure, which is not specifically limited here;
Step 2: the UE receives an RAR or absolute timing advance command, which include the TA value and a 1-bit TAG associated parameter;
Step 3-1: if the UE supports the 2TA feature, then:
   if the value of the 1-bit TAG associated parameter is 0, the UE applies the TA value to the PTAG with TAG ID 0;
   if the value of the 1-bit TAG associated parameter is 1, the UE applies the TA value to the PTAG with TAG ID of a non-zero value. For example, the non-zero TAG ID may be 1. The non-zero value may be provided by the network through system information broadcast, or may be specified by the protocol, or may be selected based on the UE implementation.

Conversely, the reverse is also applicable. For example, if the value of the 1-bit TAG associated parameter is 0, the UE applies the TA value to PTAG, where the TAG ID corresponding to PTAG is a non-zero value. If the value of the 1-bit TAG associated parameter is 1, the UE applies the TA value to PTAG, where the TAG ID corresponding to PTAG is 0.

Step 3-2: if the UE does not support the 2TA feature, then:
the UE applies the TA value to PTAG, where the TAG ID corresponding to PTAG is 0.

In the solution of the embodiments of the present disclosure, the association relationship between the value of the TAG associated parameter and the TAG ID of the PTAG can be achieved in an implicit manner, for example, the protocol specifies a specific association relationship or the protocol specifies a preset rule to achieve mapping of the value of the TAG associated parameter and the TAG ID of the PTAG; or it can be achieved through explicit configuration, for example, the specific association relationship or mapping rule is configured through signaling.

As the specific details have been covered in the preceding embodiments, they will not be reiterated here. For a UE in idle/inactive state that triggers the CBRA procedure and supports the 2TA feature, after receiving the TA, the TA is associated with the corresponding PTAG according to the TAG associated parameter. If 2TA is not supported, the TAG associated parameter is ignored and the TA is associated with the PTAG with a TAG ID of 0.

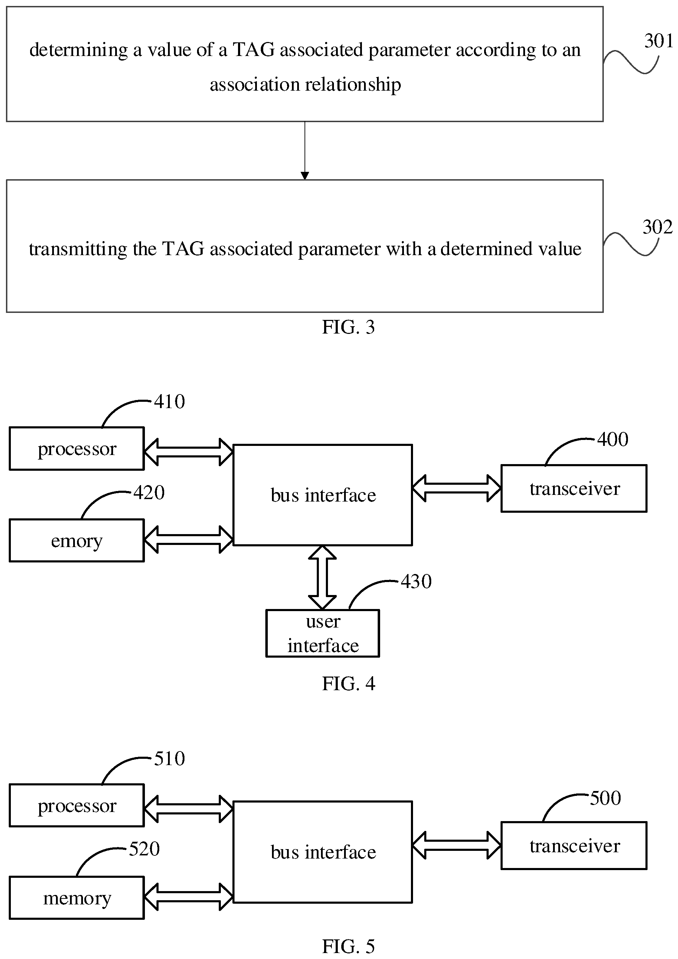

As shown in FIG. 3, one embodiment of the present disclosure further provides a method for determining timing advance group, performed by a network side device which may be specifically a base station. The method includes:
Step 301: determining a value of a TAG associated parameter according to an association relationship;
Step 302: transmitting the TAG associated parameter with a determined value;
where the association relationship includes at least one of the following items.

The first item: a first association relationship between a value of a TAG associated parameter and TAG, specified in the protocol.

One specific possible implementation is that the protocol specifies that in case that the TAG associated parameter takes different values, it is associated with different configuration parameters. For example, in case that the protocol specifies that the value of TAG associated parameter is 0, it is associated with the first TAG, where the first TAG is configured via a signaling. That is, the signaling includes a configuration parameter of the first TAG, and a specific value of the first TAG is configured to the UE through the configuration parameter, which it is not limited to this. Or, the protocol specifies preset rules, and in case that different values of the TAG associated parameters are obtained through the preset rules, they are mapped to different TAG IDs. The implementation methods are not limited to the above two.

The second item: a second association relationship between the value of the TAG associated parameter and the TAG, configured by first indication; where the second association relationship is configured per UE or per cell or per cell group. One possible implementation is that the first indication specifies a specific TAG IDs associated with each value of the TAG associated parameter. For example, the first indication configures that in case that the value of TAG associated parameter is 0, it is associated with a specific TAG ID; or that TAG associated parameters with different values are associated with TAG IDs according to a specified rule. For example, a TAG associated parameter with a value of 0 is associated with a TAG ID with a smaller value. While a value of 0 configured for the associated parameter is used here as an example, other values can also be configured for the TAG associated parameter by the first indication. Further, the first indication is not limited to configuring only a single associated parameter value, and the first indication can specify a specific TAG ID for each parameter value of the TAG associated parameter in case that the TAG associated parameter can be set to different values. As one implementation, the first indication can be configured via broadcasted system information, and/or via dedicated signaling; that is, the first indication is a broadcast message and/or dedicated signaling.

The third item: a third association relationship between a value of a TAG associated parameter and a primary timing advance group (PTAG) under a preset condition.

The preset condition has been described in detail in the UE side method embodiment and will not be repeated here.

As an implementation, by taking supporting 2TA as an example, the above TAG associated parameter can be indicated by 1-bit indication, and the value of the TAG associated parameter can be 0 or 1.

For example, for the above first item, the method of specifying the first association relationship through the protocol can be described as a method of implicitly configuring the association relationship between the value of the TAG associated parameter and the TAG. For example, the signaling allows each serving cell to be respectively configured with TAG1 and TAG2which are associated with two TAG IDs respectively. That is, the signaling includes two fields indicating TAG1 and TAG2 respectively, where the protocol specifies that in case that the value of the 1-bit TAG associated parameter is 0, it indicates that an associated TAG is TAG1; and in case that the value of the 1-bit TAG associated parameter is 1, it indicates that an associated TAG is TAG2. One specific implementation is as follows:
the UE is configured with a serving cell cell1, where the network configures TAG1 and TAG2 associated with the cell1, and a TAG ID associated with TAG1 is 2, and a TAG ID associated with TAG2 is 3;
in case that the UE receives a 1-bit TAG associated parameter (or TAG association indication) with a value of 0, it indicates it associated TAG1, that is, associated with TAG with TAG ID 2; in case that the value is 1, it indicates it associated with TAG2, that is, associated with TAG with TAG ID 3.

The method of specifying the first association relationship through a protocol in the above first item can be described as configuring the first association relationship in an implicit manner.

For the above second item, the manner of using first indication to configure a second association relationship between the value of the TAG associated parameter and the TAG, can be described as a manner of configuring an association relationship between the value of the TAG associated parameter and the TAG in an explicit manner. For example, the signaling allows each serving cell to be respectively configured with TAG1 and TAG2 which are associated with two TAG IDs respectively; that is, the signaling includes two fields to indicate TAG1 and TAG2 respectively; additionally, the signaling further includes one or two fields for configuring an association relationship between a value of a 1-bit TAG associated parameter and TAG, for example, configuring associated TAG in case that the TAG associated parameter is the value 0 or value 1 respectively. One specific implementation is as follows:
the UE is configured with a serving cell cell1, where the network configures associated TAG1 and TAG2 for the cell1, and a TAG ID associated with TAG1 is 2, a TAG ID associated with TAG2 is 3, and the network configures (via first indication) that in case that the 1-bit TAG associated parameter is set to be 0, the 1-bit TAG associated parameter is associated with TAG2;
in case that the UE receives a 1-bit TAG associated parameter with a value of 0, it indicates it associated with TAG2, that is, associated with the TAG with TAG ID 3. In case that the value of the TAG associated parameter is 1, it indicates it associated with TAG1, that is, associated with the TAG with TAG ID 2. Alternatively, the network configures that in case that the 1-bit TAG associated parameter is set to value of 0, it is associated the TAG with the smaller TAG ID between TAG1 and TAG2. In case that the UE receives a 1-bit TAG associated parameter with a value of 0, it indicates it associated with the TAG with the smaller TAG ID between TAG1 and TAG2, that is, associated with the TAG with TAG ID 2, namely TAG1. In case that the value of the TAG associated parameter is 1, it indicates it associated with the TAG with the larger TAG ID between TAG1 and TAG2, that is, associated with the TAG with TAG ID 3, namely TAG2.

The above 1-bit TAG associated parameter is received through a transmission configuration indicator (TCI) or through a RAR or an absolute timing advance command.

For the above third item, the preset condition includes at least one of the following:
condition 1: UE is in inactive state or idle state;
condition 2: the TAG associated parameter is received through a contention based random access procedure; for example, the TAG associated parameter is received in the RAR, where the RAR is transmitted in a contention based random access procedure;
condition 3: the UE supports a multi-timing advance (TA) mechanism, that is, one serving cell can be associated with multiple timing advance groups; for example, one serving cell supports 2TA, that is, the serving cell is allowed to be configured to be associated with two TAGs; that is, the UE supports a serving cell being associated with multiple timing advance groups, for example, associated with 2 TAGs;
condition 4: a time calibration timer or time alignment timer (TAT) associated with PTAG is not running; the TAT is used by the UE side to monitor validity of TA value corresponding to the PTAG; where it can be that any TAT associated with any PTAG is not running; or at least one TAT associated with the PTAG is not running or any TAT associated with any PTAG is not running;
condition 5: a value of the TAG associated parameter belongs to a preset value range. The preset value range is obtained through broadcast information or through dedicated signaling, or both.

For example, after obtaining the value of the TAG associated parameter, in case that the following conditions are met: if the UE is in inactive state or idle state, the TAG associated parameter is received through a contention based random access procedure, the UE supports a multi-timing advance TA mechanism, the TAT associated with the PTAG is not running and/or the value of the TAG associated parameter belongs to a preset value range (one or more of the above are met), the UE determines the target TAG associated with the value of the TAG associated parameter based on the above third association relationship.

In the embodiment of the present disclosure, the network side device determines the value of the TAG associated parameter according to the association relationship; transmits the TAG associated parameter with the determined value, so that the UE can determine the target TAG associated with the value of the TAG associated parameter based on the association relationship, thereby achieving the purpose of the UE determining the target TAG associated with the applied TA or determining the applied TA according to the target TAG in the multi-TA scenario, through the above association relationship.

Optionally, the method of the embodiment of the present disclosure further includes:
transmitting second indication, where the second indication is used to indicate whether the network supports the multi-TA mechanism.

Here, the network side device transmits the second indication, so that in case that the network side device supports the multi-TA mechanism, the UE can determine the target TAG associated with the value of the TAG associated parameter according to the association relationship. One possible implementation is that the second indication indicates that the network supports the multi-TA mechanism and at the same time indicates that the UE needs to read the TAG associated parameter, and an associated target TAG is determined according to the value of the TAG associated parameter, otherwise ignoring the TAG associated parameter or considering that the TAG associated parameter is a default value; or the second indication indicates that the network supports the multi-TA mechanism and at the same time indicates that in certain scenarios (for example, and at least one of the following conditions is met: during contention based access procedure, UE in idle/inactive state, UE has not yet configured with multi-TA, UE supports multi-TA characteristics), the TAG associated parameter needs to be read, and an associated target TAG is determined according to the value of the TAG associated parameter, otherwise ignoring the TAG associated parameter or considering that the TAG associated parameter is a default value; or the second indication indicates that the network supports the multi-TA mechanism and at the same time indicates that the UE needs to read the TAG associated parameter, if the TAG associated parameter is within a preset value range, an associated target TAG is determined according to the value of the TAG associated parameter, otherwise (the value of the TAG associated parameter is not within the preset value range, or the second indication indicates that the multi-TA mechanism is not supported) ignoring the TAG associated parameter or considering that the TAG associated parameter is a default value.

Optionally, the second indication is transmitted via system information broadcast and/or dedicated signaling, that is, the second indication may be a broadcast message or a dedicated signaling.

Optionally, the method of the embodiment of the present disclosure further includes:
configuring the third association relationship based on third indication;
where the third indication is used to configure a mapping relationship between each preset value within a preset value range and the TAG identifier of the PTAG.

Optionally, the third indication is transmitted by broadcasted system information and/or by dedicated signaling. That is, the third indication can be a broadcast message or a dedicated signaling. Here, the third association relationship is configured by the third indication, thereby achieving the purpose of configuring the third association relationship in an explicit manner.

Optionally, the method of the embodiment of the present disclosure further includes at least one of the following:
configuring a TAG identifier associated with a second PTAG, where the second PTAG is a PTAG corresponding to the TAG associated parameter with a value being a second preset value; optionally, the configuration is performed through broadcasted system information and/or configure through dedicated signaling; or
configuring a preset value range for the value of the TAG associated parameter; where in case that the value of the TAG associated parameter belongs to the preset value range, the TAG associated with the TAG associated parameter is PTAG. Optionally, the configuration is performed by broadcasted system information and/or by dedicated signaling.

Here, the network side device configures the TAG identifier associated with the second PTAG so that the UE can determine the identifier of the PTAG corresponding to the value of the TAG associated parameter according to the third association relationship, which is not limited to one TAG identifier associated with the second PTAG.

In the embodiment of the present disclosure, the network side device determines the value of the TAG associated parameter according to the association relationship; transmits the TAG associated parameter with the determined value, so that the UE can determine the target TAG associated with the value of the TAG associated parameter based on the association relationship, thereby achieving the purpose of the UE determining the target TAG associated with the applied TA or determining the applied TA according to the target TAG in the multi-TA scenario, through the above association relationship.

It is to be noted that the method for determining the timing advance group executed by the network device is a method corresponding to the above method for determining the timing advance group executed by the UE. The specific interaction procedure between the two has been described in detail in the embodiment on the UE side and will not be repeated here.

As shown in FIG. 4, one embodiment of the present disclosure provides a device for determining timing advance group, applied to a user equipment (UE) and including a memory 420, a transceiver 400, and a processor 410.

The memory 420 is used to store a computer program. The transceiver 400 is used to transmit and receive data under the control of the processor 410. The processor 410 is used to read the computer program in the memory 420 and perform the following operations:
obtaining a value of a timing advance group (TAG) associated parameter;
determining a target TAG associated with the value of the TAG associated parameter according to an association relationship;
where the association relationship includes at least one of the following items.
a first association relationship between a value of a TAG associated parameter and TAG, specified in the protocol;
a second association relationship between the value of the TAG associated parameter and the TAG, configured by first indication; or
a third association relationship between a value of a TAG associated parameter and a primary timing advance group (PTAG) under a preset condition.

The preset condition includes at least one of the following:
UE is in inactive state or idle state;
the TAG associated parameter is received through a contention based random access procedure;
the UE supports a multi-timing advance (TA) mechanism;
a time alignment timer (TAT) associated with PTAG is not running; or
a value of the TAG associated parameter belongs to a preset value range.

As an implementation, the above TAG associated parameter can be indicated by 1-bit indication, and the value of the TAG associated parameter can be 0 or 1.

For example, for the above first item, the method of specifying the first association relationship through the protocol can be described as a method of implicitly configuring the association relationship between the value of the TAG associated parameter and the TAG. For example, the signaling allows each serving cell to be respectively configured with TAG1 and TAG2which are associated with two TAG IDs respectively. That is, the signaling includes two fields indicating TAG1 and TAG2 respectively, where the protocol specifies that in case that the 1-bit TAG associated parameter is set to value of 0, it indicates that an associated TAG is TAG1; and in case that the 1-bit TAG associated parameter is set to value of 1, it indicates that an associated TAG is TAG2. One specific implementation is as follows:
the UE is configured with a serving cell cell1, where the network configures TAG1 and TAG2 associated with the cell1, and a TAG ID associated with TAG1 is 2, and a TAG ID associated with TAG2 is 3;
in case that the UE receives a 1-bit TAG associated parameter (or TAG association indication) with a value of 0, it indicates it associated with TAG1, that is, associated with TAG with TAG ID 2; in case that the value is 1, it indicates it associated with TAG2, that is, associated with TAG with TAG ID 3.

The method of specifying the first association relationship through a protocol in the above first item can be described as configuring the first association relationship in an implicit manner.

For the second item above, the manner of using first indication to configure a second association relationship between the value of the TAG associated parameter and the TAG, can be described as a manner of configuring an association relationship between the value of the TAG associated parameter and the TAG in an explicit manner. For example, the signaling allows each serving cell to be respectively configured with TAG1 and TAG2 which are associated with two TAG IDs respectively; that is, the signaling includes two fields to indicate TAG1 and TAG2 respectively; additionally, the signaling further includes one or two fields for configuring an association relationship between a value of a 1-bit TAG associated parameter and TAG, for example, configuring associated TAG in case that the TAG associated parameter is the value 0 or value 1 respectively. One specific implementation is as follows:
the UE is configured with a serving cell cell1, where the network configures associated TAG1 and TAG2 for the cell1, and a TAG ID associated with TAG1 is 2, a TAG ID associated with TAG2 is 3, and the network configures (via first indication) that in case that the 1-bit TAG associated parameter is set to be 0, the 1-bit TAG associated parameter is associated with TAG2;
in case that the UE receives a 1-bit TAG associated parameter with a value of 0, it indicates it associated with TAG2, that is, associated with the TAG with TAG ID 3. In case that the value of the TAG associated parameter is 1, it indicates it associated with TAG1, that is, associated with the TAG with TAG ID 2.

The above 1-bit TAG associated parameter is received through a transmission configuration indicator (TCI) or through a RAR or an absolute timing advance command.

For the above third item, in case that the UE receives a TAG associated parameter through the contention based random access procedure, and/or the UE is in inactive state or idle state, the target TAG is determined based on the third association relationship, that is, the target TAG is determined to be PTAG.

In addition, it is to be noted that the first association relationship and the second association relationship may be the same or different.

In FIG. 4, a bus architecture may include any number of interconnected bus and bridge. Specifically, various circuits of one or more processors, which are represented by the processor 410, and one or more memories, which are represented by the memory 420, are linked together. The bus architecture may link various other circuits, such as a peripheral device, voltage regulator and a power management circuit together. These features are well known in this field; therefore, this disclosure does not make further description on these features. The bus interface provides an interface. The transceiver 400 may be multiple elements, including a transmitter and a receiver and provide units, which communicate with other devices on the transmission medium. The transmission medium includes radio channels, wired channels, optical cables, etc. For different UEs, a user interface 430 may be an interface that can be connected to external or internal devices. The connected devices include but are not limited to a small keyboard, a display, a speaker, a microphone, a joystick, etc.

The processor 410 is responsible for managing the bus architecture and the normal processing. The memory 420 may be used to store data used by the processor 410 for performing operations.

In some embodiments, the processor 410 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

Optionally, the first association relationship is obtained based on a preset mapping rule;
The preset mapping rule is to associate different values of the TAG associated parameter according to a preset arrangement order of TAG identifiers, and the TAG identifier is a TAG identifier associated with a serving cell configured by the network for the UE.

Optionally, the processor is further used to perform the following steps:
in case that a preset condition is met, determining a target PTAG associated with the value of the TAG associated parameter, according to the third association relationship.

Optionally, the processor is further used to perform the following steps:
in case that the value of the TAG associated parameter is a first preset value, determining, according to the third association relationship, that the target TAG is a first PTAG corresponding to the first preset value;
or, in case that the value of the TAG associated parameter is a second preset value, determining, according to the third association relationship, that the target TAG is a second PTAG corresponding to a second preset value.

Optionally, the TAG identifier of the first PTAG is a default identifier.

Optionally, the TAG identifier of the second PTAG satisfies at least one of the following:
the TAG identifier of the second PTAG is a target value specified by the protocol;
the TAG identifier of the second PTAG is configured by the network;
the TAG identifier of the second PTAG is determined based on the UE implementation; or
a value of the TAG identifier of the second PTAG is different from the default identifier.

Optionally, the processor is further used to perform the following steps:
obtaining second indication, where the second indication is used to indicate whether the network supports a multi-TA mechanism;
in case that the second indication indicates that the network supports a multi-TA mechanism, determining a target TAG associated with the value of the TAG associated parameter according to the association relationship.

Optionally, the third association relationship is obtained based on a mapping relationship between each preset value within a preset value range configured by the third indication and a TAG identifier of the PTAG.

It is to be noted here that the above device provided in the embodiment of the present disclosure can implement all the method steps implemented by the above embodiment of the method for determining the timing advance group applied to the UE, and can achieve the same technical effect. The parts and beneficial effects of this embodiment that are the same as the method embodiment will not be described in detail here.

As shown in FIG. 5, one embodiment of the present disclosure further provides a device for determining timing advance group, including a memory 520, a transceiver 500, and a processor 510.

The memory 520 is used to store a computer program. The transceiver 500 is used to transmit and receive data under the control of the processor. The processor 510 is used to read the computer program in the memory and perform the following operations:
determining a value of a TAG associated parameter according to an association relationship;
transmitting the TAG associated parameter with a determined value;
where the association relationship includes at least one of the following:
a first association relationship between a value of a TAG associated parameter and TAG, specified in the protocol;
a second association relationship between the value of the TAG associated parameter and the TAG, configured by first indication; or
a third association relationship between a value of a TAG associated parameter and a primary timing advance group (PTAG) under a preset condition.

In FIG. 5, a bus architecture may include any number of interconnected bus and bridge. Specifically, various circuits of one or more processors, which are represented by the processor 510, and one or more memories, which are represented by the memory 520, are linked together. The bus architecture may link various other circuits, such as a peripheral device, voltage regulator and a power management circuit together. These features are well known in this field; therefore, this disclosure does not make further description on these features. The bus interface provides an interface. The transceiver 500 may be multiple elements, including a transmitter and a receiver and provide units, which communicate with other devices on the transmission medium. The transmission medium includes radio channels, wired channels, optical cables, etc. The processor 510 is responsible for managing the bus architecture and the normal processing. The memory 520 may be used to store data used by the processor 510 for performing operations.

The processor 510 may be a central processing unit (CPU), an application specific integrated circuit (ASIC), a field-programmable gate array (FPGA) or a complex programmable logic device (CPLD). The processor may also adopt multi-core architecture.

It is to be noted here that the above device provided in the embodiment of the present disclosure can implement all the method steps implemented by the above method embodiment for determining the timing advance group applied to the network side device, and can achieve the same technical effect. The parts and beneficial effects of this embodiment that are the same as the method embodiment will not be described in detail here.

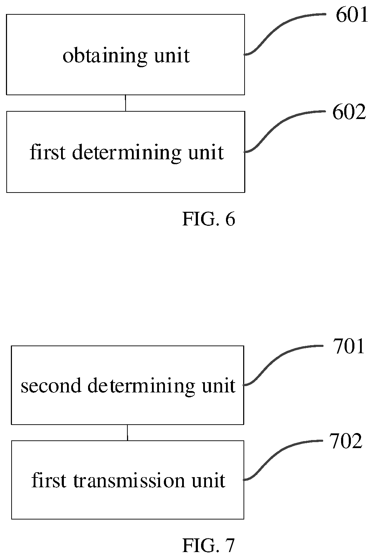

As shown in FIG. 6, one embodiment of the present disclosure further provides a device for determining timing advance group, including:
an obtaining unit 601 used to obtain a value of a timing advance group (TAG) associated parameter;
a first determining unit 602 used to determine a target TAG associated with the value of the TAG associated parameter according to an association relationship;
where the association relationship includes at least one of the following items.
a first association relationship between a value of a TAG associated parameter and TAG, specified in the protocol;
a second association relationship between the value of the TAG associated parameter and the TAG, configured by first indication; or
a third association relationship between a value of a TAG associated parameter and a primary timing advance group (PTAG) under a preset condition.

The preset condition includes at least one of the following:
UE is in inactive state or idle state;
the TAG associated parameter is received through a contention based random access procedure;
the UE supports a multi-timing advance (TA) mechanism;
a time alignment timer (TAT) associated with PTAG is not running; or
a value of the TAG associated parameter belongs to a preset value range.

Optionally, the first association relationship is obtained based on a preset mapping rule.

The preset mapping rule is to associate different values of the TAG associated parameter according to a preset arrangement order of TAG identifiers, and the TAG identifier is a TAG identifier associated with a serving cell configured by the network for the UE.

Optionally, the first determining unit is used to, in case that a preset condition is met, determine a target PTAG associated with the value of the TAG associated parameter, according to the third association relationship.

Optionally, the first determining unit is used to:
in case that the value of the TAG associated parameter is a first preset value, determine, according to the third association relationship, that the target TAG is a first PTAG corresponding to the first preset value;
or, in case that the value of the TAG associated parameter is a second preset value, determine, according to the third association relationship, that the target TAG is a second PTAG corresponding to a second preset value.

Optionally, the TAG identifier of the first PTAG is a default identifier.

Optionally, the TAG identifier of the second PTAG satisfies at least one of the following:
the TAG identifier of the second PTAG is a target value specified by the protocol;
the TAG identifier of the second PTAG is configured by the network;
the TAG identifier of the second PTAG is determined based on the UE implementation; or
a value of the TAG identifier of the second PTAG is different from the default identifier.

Optionally, the first determining unit includes:
an obtaining subunit used to obtain second indication, where the second indication is used to indicate whether the network supports a multi-TA mechanism;
a determination subunit used to, in case that the second indication indicates that the network supports a multi-TA mechanism, determine a target TAG associated with the value of the TAG associated parameter according to the association relationship.

Optionally, the third association relationship is obtained based on a mapping relationship between each preset value within a preset value range configured by the third indication and a TAG identifier of the PTAG.

It is to be noted here that the above device provided in the embodiment of the present disclosure can implement all the method steps implemented by the above embodiment of the method for determining the timing advance group applied to the UE, and can achieve the same technical effect. The parts and beneficial effects of this embodiment that are the same as the method embodiment will not be described in detail here.

As shown in FIG. 7, one embodiment of the present disclosure further provides a device for determining timing advance group, including:
a second determining unit 701 used to determine a value of a TAG associated parameter according to an association relationship;
a first transmission unit 702 used to transmit the TAG associated parameter with a determined value;
where the association relationship includes at least one of the following:
a first association relationship between a value of a TAG associated parameter and TAG, specified in the protocol;
a second association relationship between the value of the TAG associated parameter and the TAG, configured by first indication; or
a third association relationship between a value of a TAG associated parameter and a primary timing advance group (PTAG) under a preset condition.

The preset condition includes at least one of the following:
UE is in inactive state or idle state;
the TAG associated parameter is received through a contention based random access procedure;
the UE supports a multi-timing advance (TA) mechanism;
a time alignment timer (TAT) associated with PTAG is not running; or
a value of the TAG associated parameter belongs to a preset value range.

Optionally, the device of the embodiment of the present disclosure further includes:
a second transmission unit used to transmit second indication, where the second indication is used to indicate whether the network supports the multi-TA mechanism.

Optionally, the device of the embodiment of the present disclosure further includes:
a first configuration unit used to configure the third association relationship based on third indication;
where the third indication is used to configure a mapping relationship between each preset value within a preset value range and the TAG identifier of the PTAG.

Optionally, the device of the embodiment of the present disclosure further includes:
a second configuration unit used to perform at least one of the following:
configuring a TAG identifier associated with a second PTAG, where the second PTAG is a PTAG corresponding to the TAG associated parameter with a value being a second preset value; or
configuring a preset value range for the value of the TAG associated parameter; where in case that the value of the TAG associated parameter belongs to the preset value range, the TAG associated with the TAG associated parameter is PTAG.

It is to be noted here that the above device provided in the embodiment of the present disclosure can implement all the method steps implemented by the above method embodiment for determining the timing advance group applied to the network side device, and can achieve the same technical effect. The parts and beneficial effects of this embodiment that are the same as the method embodiment will not be described in detail here.

It is to be noted that division of units in the embodiment of the present disclosure is exemplary, and is only a logical function division, and there may be another division manner in actual implementation. In addition, various functional units in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure provides a processor-readable storage medium. The processor-readable storage medium stores a program instruction which is used to cause a processor to execute all steps implemented in the method embodiments performed by the UE or all steps implemented in the method embodiments performed by the network side device, and can achieve the same technical effects. Specific details regarding portions identical to those in the method embodiments and their corresponding beneficial effects are omitted herein to avoid redundancy.

The terminal device involved in the embodiments of the present disclosure may be a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device (network side device) involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Each of the network device and the terminal device can use one or more antennas for multi input multi output (MIMO) transmission between the network device and the terminal device. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

A person skilled in the art should understand that the embodiments of the present application may be provided as methods, systems, or computer program products. Therefore, the present application may adopt the form of complete hardware embodiments, complete software embodiments, or embodiments combining software and hardware aspects. Moreover, the present application may adopt the form of a computer program product implemented on one or more computer available storage media (including but not limited to a disk storage, an optical storage, etc.) containing computer available program code.

The present application is described with reference to flowcharts and/or block diagrams of methods, devices (systems), and computer program products according to the embodiments of the present application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. A method for determining a timing advance group (TAG), performed by a user equipment (UE), comprising:
obtaining a value of a TAG associated parameter; and
determining a target TAG associated with the value of the TAG associated parameter according to an association relationship;
wherein the association relationship includes at least one of the following:
a first association relationship between a value of a TAG associated parameter and TAG, specified in the protocol;
a second association relationship between a value of a TAG associated parameter and TAG, configured by first indication; or
a third association relationship between a value of a TAG associated parameter and a primary timing advance group (PTAG) under a preset condition;
the preset condition includes at least one of the following:
UE is in inactive state or idle state;
the TAG associated parameter is received through a contention based random access procedure;
the UE supports a multi-timing advance (TA) mechanism;
a time alignment timer (TAT) associated with PTAG is not running; or
the value of the TAG associated parameter belongs to a preset value range.

2. The method according to claim 1, wherein the first association relationship is obtained based on a preset mapping rule;
the preset mapping rule is to associate different values of the TAG associated parameter according to a preset arrangement order of TAG identifiers, and the TAG identifier is a TAG identifier associated with a serving cell configured by the network for the UE.

3. The method according to claim 1, wherein the determining a target TAG associated with the value of the TAG associated parameter according to an association relationship, includes:
in case of a preset condition met, determining a target PTAG associated with the value of the TAG associated parameter, according to the third association relationship.

4. The method according to claim 1 or 3, wherein the determining a target TAG associated with the value of the TAG associated parameter according to an association relationship, includes:
in case of the value of the TAG associated parameter being a first preset value, determining, according to the third association relationship, that the target TAG is a first PTAG corresponding to the first preset value;
or, in case of the value of the TAG associated parameter being a second preset value, determining, according to the third association relationship, that the target TAG is a second PTAG corresponding to the second preset value.

5. The method according to claim 4, wherein the TAG identifier of the first PTAG is a default identifier.

6. The method according to claim 4, wherein the TAG identifier of the second PTAG satisfies at least one of the following:
the TAG identifier of the second PTAG is a target value specified by the protocol;
the TAG identifier of the second PTAG is configured by the network;
the TAG identifier of the second PTAG is determined based on the UE implementation; or
the value of the TAG identifier of the second PTAG is different from a default identifier.

7. The method according to claim 1, wherein the determining a target TAG associated with the value of the TAG associated parameter according to an association relationship, includes:
obtaining second indication, wherein the second indication is used to indicate whether the network supports a multi-TA mechanism;
in case of the second indication indicating that the network supports a multi-TA mechanism, determining a target TAG associated with the value of the TAG associated parameter according to the association relationship.

8. The method according to claim 1, wherein the third association relationship is obtained based on a mapping relationship between each preset value within a preset value range configured by the third indication and a TAG identifier of the PTAG.

9. A method for determining a timing advance group (TAG), performed by a network side device, comprising:
determining a value of a TAG associated parameter according to an association relationship; and
transmitting the TAG associated parameter with a determined value;
wherein the association relationship includes at least one of the following items.
a first association relationship between a value of a TAG associated parameter and TAG, specified in the protocol;
a second association relationship between a value of a TAG associated parameter and TAG, configured by first indication; or
a third association relationship between a value of a TAG associated parameter and a primary timing advance group (PTAG) under a preset condition;
the preset condition includes at least one of the following:
UE is in inactive state or idle state;
the TAG associated parameter is received through a contention based random access procedure;
the UE supports a multi-timing advance (TA) mechanism;
a time alignment timer (TAT) associated with PTAG is not running; or
a value of the TAG associated parameter belongs to a preset value range.

10. The method according to claim 9, further comprising:
transmitting second indication, wherein the second indication is used to indicate whether the network supports the multi-TA mechanism.

11. The method according to claim 9, further comprising:
configuring the third association relationship based on third indication;
wherein the third indication is used to configure a mapping relationship between each preset value within a preset value range and the TAG identifier of the PTAG.

12. The method according to claim 9, further comprising at least one of the following:
configuring a TAG identifier associated with a second PTAG; wherein the second PTAG is a PTAG corresponding to the TAG associated parameter with a value being a second preset value; or
configuring a preset value range for the value of the TAG associated parameter; wherein in case of the value of the TAG associated parameter belonging to the preset value range, the TAG associated with the TAG associated parameter is PTAG.

13. A device for determining a timing advance group (TAG), comprising: a memory, a transceiver, and a processor;
wherein the memory is used to store a computer program; the transceiver is used to transmit and receive data under the control of the processor; the processor is used to read the computer program in the memory and perform the following operations:
obtaining a value of a TAG associated parameter; and
determining a target TAG associated with the value of the TAG associated parameter according to an association relationship;
wherein the association relationship includes at least one of the following items.
a first association relationship between a value of a TAG associated parameter and TAG, specified in the protocol;
a second association relationship between a value of a TAG associated parameter and TAG, configured by first indication; or
a third association relationship between a value of a TAG associated parameter and a primary timing advance group (PTAG) under a preset condition;
the preset condition includes at least one of the following:
UE is in state inactive or idle state;
the TAG associated parameter is received through a contention based random access procedure;
the UE supports a multi-timing advance (TA) mechanism;
a time alignment timer (TAT) associated with PTAG is not running; or
a value of the TAG associated parameter belongs to a preset value range.

14. The device according to claim 13, wherein the first association relationship is obtained based on a preset mapping rule;
the preset mapping rule is to associate different values of the TAG associated parameter according to a preset arrangement order of TAG identifiers, and the TAG identifier is a TAG identifier associated with a serving cell configured by the network for the UE.

15. The device according to claim 13, wherein the processor is used to perform the following operations:
in case of a preset condition met, determining a target PTAG associated with the value of the TAG associated parameter, according to the third association relationship.

16. The device according to claim 13 or 15, wherein the processor is used to perform the following operations:
in case of the value of the TAG associated parameter being a first preset value, determining, according to the third association relationship, that the target TAG is a first PTAG corresponding to the first preset value;
or, in case of the value of the TAG associated parameter being a second preset value, determining, according to the third association relationship, that the target TAG is a second PTAG corresponding to the second preset value.

17. The device according to claim 16, wherein the TAG identifier of the first PTAG is a default identifier.

18. The device according to claim 16, wherein the TAG identifier of the second PTAG satisfies at least one of the following:
the TAG identifier of the second PTAG is a target value specified by the protocol;
the TAG identifier of the second PTAG is configured by the network;
the TAG identifier of the second PTAG is determined based on the UE implementation; or
the value of the TAG identifier of the second PTAG is different from a default identifier.

19. The device according to claim 13, wherein the processor is used to perform the following operations:
obtaining second indication, wherein the second indication is used to indicate whether the network supports a multi-TA mechanism;
in case of the second indication indicating that the network supports a multi-TA mechanism, determining a target TAG associated with the value of the TAG associated parameter according to the association relationship.

20. The device according to claim 13, wherein the third association relationship is obtained based on a mapping relationship between each preset value within a preset value range configured by the third indication and a TAG identifier of the PTAG.

21. A device for determining a timing advance group (TAG), comprising: a memory, a transceiver, and a processor;
wherein the memory is used to store a computer program; the transceiver is used to transmit and receive data under the control of the processor; the processor is used to read the computer program in the memory and perform the following operations:
determining a value of a TAG associated parameter according to an association relationship; and
transmitting the TAG associated parameter with a determined value;
wherein the association relationship includes at least one of the following items.
a first association relationship between a value of a TAG associated parameter and TAG, specified in the protocol;
a second association relationship between a value of a TAG associated parameter and the TAG, configured by first indication; or
a third association relationship between a value of a TAG associated parameter and a primary timing advance group (PTAG) under a preset condition;
the preset condition includes at least one of the following:
UE is in inactive state or idle state;
the TAG associated parameter is received through a contention based random access procedure;
the UE supports a multi-timing advance (TA) mechanism;
a time alignment timer (TAT) associated with PTAG is not running; or
a value of the TAG associated parameter belongs to a preset value range.

22. The device according to claim 21, wherein the processor is used to perform the following operations:
transmitting second indication, wherein the second indication is used to indicate whether the network supports the multi-TA mechanism.

23. The device according to claim 21, wherein the processor is used to perform the following operations:
configuring the third association relationship based on third indication;
wherein the third indication is used to configure a mapping relationship between each preset value within a preset value range and the TAG identifier of the PTAG.

24. The device according to claim 21, wherein the processor is used to perform at least one of the following:
configuring a TAG identifier associated with a second PTAG; wherein the second PTAG is a PTAG corresponding to the TAG associated parameter with a value being a second preset value; or
configuring a preset value range for the value of the TAG associated parameter; wherein in case of the value of the TAG associated parameter belonging to the preset value range, the TAG associated with the TAG associated parameter is PTAG.

25. A device for determining a timing advance group (TAG), comprising:
an obtaining unit used to obtain a value of a TAG associated parameter; and
a first determining unit used to determine a target TAG associated with the value of the TAG associated parameter according to an association relationship;
wherein the association relationship includes at least one of the following items.
a first association relationship between a value of a TAG associated parameter and TAG, specified in the protocol;
a second association relationship between a value of a TAG associated parameter and TAG, configured by first indication; or
a third association relationship between a value of a TAG associated parameter and a primary timing advance group (PTAG) under a preset condition;
the preset condition includes at least one of the following:
UE is in inactive state or idle state;
the TAG associated parameter is received through a contention based random access procedure;
the UE supports a multi-timing advance (TA) mechanism;
a time alignment timer (TAT) associated with PTAG is not running; or
a value of the TAG associated parameter belongs to a preset value range.

26. The device according to claim 25, wherein the first association relationship is obtained based on a preset mapping rule;
the preset mapping rule is to associate different values of the TAG associated parameter according to a preset arrangement order of TAG identifiers, and the TAG identifier is a TAG identifier associated with a serving cell configured by the network for the UE.

27. The device according to claim 25, wherein the first determining unit is used to, in case of a preset condition met, determine a target PTAG associated with the value of the TAG associated parameter, according to the third association relationship.

28. The device according to claim 25 or 27, wherein the first determining unit is used to:
in case of the value of the TAG associated parameter being a first preset value, determine, according to the third association relationship, that the target TAG is a first PTAG corresponding to the first preset value;
or, in case of the value of the TAG associated parameter being a second preset value, determine, according to the third association relationship, that the target TAG is a second PTAG corresponding to the second preset value.

29. The device according to claim 28, wherein the TAG identifier of the first PTAG is a default identifier.

30. The device according to claim 28, wherein the TAG identifier of the second PTAG satisfies at least one of the following:
the TAG identifier of the second PTAG is a target value specified by the protocol;
the TAG identifier of the second PTAG is configured by the network;
the TAG identifier of the second PTAG is determined based on the UE implementation; or
the value of the TAG identifier of the second PTAG is different from a default identifier.

31. The device according to claim 25, wherein the first determining unit includes:
an obtaining subunit used to obtain second indication, wherein the second indication is used to indicate whether the network supports a multi-TA mechanism;
a determining subunit used to, in case of the second indication indicating that the network supports a multi-TA mechanism, determine a target TAG associated with the value of the TAG associated parameter according to the association relationship.

32. The device according to claim 25, wherein the third association relationship is obtained based on a mapping relationship between each preset value within a preset value range configured by the third indication and a TAG identifier of the PTAG.

33. A device for determining a timing advance group (TAG), comprising:
a second determining unit used to determine a value of a TAG associated parameter according to an association relationship; and
a first transmission unit used to transmit the TAG associated parameter with a determined value;
wherein the association relationship includes at least one of the following items.
a first association relationship between a value of a TAG associated parameter and TAG, specified in the protocol;
a second association relationship between a value of a TAG associated parameter and TAG, configured by first indication; or
a third association relationship between a value of a TAG associated parameter and a primary timing advance group (PTAG) under a preset condition;
the preset condition includes at least one of the following:
UE is in inactive state or idle state;
the TAG associated parameter is received through a contention based random access procedure;
the UE supports a multi-timing advance (TA) mechanism;
a time alignment timer (TAT) associated with PTAG is not running; or
a value of the TAG associated parameter belongs to a preset value range.

34. The device according to claim 33, further comprising:
a second transmission unit used to transmit second indication, wherein the second indication is used to indicate whether the network supports the multi-TA mechanism.

35. The device according to claim 33, further comprising:
a first configuration unit used to configure the third association relationship based on third indication;
wherein the third indication is used to configure a mapping relationship between each preset value within a preset value range and the TAG identifier of the PTAG.

36. The device according to claim 33, further comprising:
a second configuration unit used to perform at least one of the following:
configuring a TAG identifier associated with a second PTAG; wherein the second PTAG is a PTAG corresponding to the TAG associated parameter with a value being a second preset value; or
configuring a preset value range for the value of the TAG associated parameter; wherein in case of the value of the TAG associated parameter belonging to the preset value range, the TAG associated with the TAG associated parameter is PTAG.

37. A processor-readable storage medium, comprising: a computer program stored thereon; wherein the computer program is used to cause a processor to execute steps of the method for determining a timing advance group according to any one of claims 1 to 8, or to execute steps of the method for determining a timing advance group according to any one of claims 9 to 12.
